# EUROPEAN PATENT APPLICATION

(11) **EP 3 524 831 A1**
(43) Date of publication of application: **14.08.2019**
(21) Application number: 19155741.2
(22) Date of filing: 06.02.2019
(51) Int. Cl.: F16B 12/20, F16B 12/24

(54) **SELF-LOCKING EXPANSION JOINT FOR A FURNITURE UNIT**

(30) Priority: 08.02.2018 IT 201800002497
(71) Applicant: O.M.M. Srl dell'Ing. Roberto Natale Mariani, 20832 Desio (MB) (IT)
(72) Inventor: MARIANI, Roberto Natale, 20832 Desio (MB) (IT)
(74) Representative: Colombo, Stefano Paolo

(57) **Abstract**

An expansion joint (101) for joining a first panel (200) together with a second panel (210) is described. The joint comprises a cylindrical body (10), a plug (20), a fixing pin (30) and a fixing member (40) inside the body. The joint is configured so that, when it is pressed inside the recess, the collar of the plug breaks and the body penetrates inside the plug. This movement causes radial expansion of the plug inside the recess inside which it is inserted. When the body reaches the end of its travel path, the fixing pin engages securely the fixing member and locks the radially expanded plug fitted onto the body.

## Description

### BACKGROUND

The present invention relates in general to joining systems for joining together two panels of a furniture unit or the like. More particularly, it relates to a joint suitable for panels with a non-uniform consistency such chipboard panels or the like.

### PRIOR ART

As is known, a furniture unit typically comprises two vertical panels (commonly called "flanks" or "shoulders"), a horizontal bottom panel (commonly called "base") and a top panel which is also horizontal (commonly called "lid"). Furthermore, the furniture unit may comprise a number of horizontal intermediate panels, otherwise known as "shelves".

During assembly of the furniture unit, the shoulders are typically joined together with the bottom panel of the furniture unit and with the top panel. Moreover, the intermediate panels are usually joined to the shoulders of the furniture unit so as to form shelves and/or reinforce the furniture unit.

In particular, a shelf of a furniture unit may be a shelf with a single visible edge (also called "single-face" or "blind" shelf) or a shelf with double visible edge (also called "double-face" shelf). In the first case it consists of a shelf where, when the furniture unit is assembled, only the front edge is visible and the rear edge normally rests against a panel or a wall behind the furniture unit. In the second case instead it consists of a shelf which, when the furniture unit is assembled, may have visible both the front edge and the rear edge.

WO 2016/199015 and WO 2016/199024 describe joints for furniture units.

### SUMMARY OF THE INVENTION

The Applicant has defined the general aim of providing an expansion joint for joining together two panels, in particular for panels made of wood or chipboard or a non-homogeneous material.

Chipboard panels have the characteristic feature, because they are manufactured using pressurized machinery, of having more compact particles in the vicinity of the flat outer surfaces. Close to the outer surface, generally the particles have small dimensions and are more compact than the particles in the central zone which are less compact and have larger dimensions. This means that mountings fixed in the central zone are less secure than mountings fixed in the outermost zone. The Applicant has defined the aim of finding a strong and reliable solution which can be fixed securely in the central zone.

The Applicant has defined the aim of providing such a joint which may be supplied preassembled.

The Applicant has defined the aim of providing such a joint which may be mounted in position in a panel directly at the factory so that the less work is involved for the assembler, and assembly is easier, quick, precise and reliable.

The Applicant has defined the aim of providing such a joint which may be inserted in position in a panel only by exerting a pressing force in a single direction, substantially without rotation.

The Applicant has defined the aim of providing such a joint which may be used for a shelf, for a lid of a furniture unit or for its base.

The Applicant has defined the aim of providing such a joint which is substantially concealed when the furniture unit is assembled, except for, if necessary, a transverse hole which may be used to insert a tool such as a key for a hex socket, Torx, star head, PH, PZ, flat-head or similar screw.

The joint according to the present invention uses a very broad fixing area, namely substantially the whole of the recess formed for receiving the plug. It has been shown from the tests carried out that the extraction resistance is directly proportional to the area occupied, namely the greater the surface area of the plug, the greater is the resistance.

At least one of the aims mentioned above is achieved with an expansion joint according to the present invention.

The joint comprises a cylindrical body, a plug connected to the cylindrical body by means of a thin collar, a fixing pin and a fixing member inside the body. The joint is configured so that, when it is pressed into the recess, the collar on the plug breaks and the body penetrates inside the plug. This movement causes radial expansion of the plug inside the recess into which it has been inserted. When the body reaches the end of its travel path, the fixing pin engages securely with the fixing member and locks the radially expanded plug fitted onto the body.

According to a first aspect, an expansion joint for joining a first panel with a second panel is provided, the joint comprising:
a body having a substantially cylindrical shape with an outer end and an inner end,
a plug comprising a proximal end with a collar, a side surface and a distal end with a closed surface having a central hole, and
a fixing pin comprising a shank and a head;
   wherein, in a preassembled configuration, said plug is connected to the inner end of the body by means of the collar while the rest of the plug is not fitted on the body;
   wherein, in the preassembled configuration, the shank of the fixing pin is held in the central hole of the plug;
   wherein said body comprises a fixing member; and
   wherein, in an expanded configuration inside a recess of a panel,
said shank is in engagement with said fixing member so as to lock the surface of the distal end of the plug between the head of the pin and the inner end of the body.

The fixing member preferably comprises a self-locking stop ring for shafts.

Alternatively, the fixing member comprises a plurality of self-locking stop rings for shafts, packed together.

Preferably, the joint comprises a first bevel gear and a second bevel gear engaged with the first bevel gear, a transverse shaft integral with the first bevel gear and a longitudinal shaft integral with the second bevel gear such that the rotation of the transverse shaft causes rotation of the longitudinal shaft.

The transverse shaft may be accessible from the outside of the body.

According to embodiments, the transverse shaft comprises a threaded pin.

According to embodiments, the transverse shaft comprises an internally threaded nut.

According to embodiments, the front end of the body is configured so as to have a protruding threaded pin comprising two half-pins, wherein said longitudinal shaft comprises a conical end portion configured to cooperate with an inner conical portion of the threaded pin.

According to embodiments, the joint comprises two plugs, each connected to each of the ends of the body, two fixing pins and two fixing members, one for each fixing pin.

According to embodiments, the joint comprises a threaded transverse hole in a projecting part of the front end of the body, configured to engage a threaded pin of another joint.

According to embodiments, the joint also comprises a second body, a second plug and a second fixing member and a central pivot for mutually rotating the bodies with respect to each other.

According to another aspect, the present invention provides a method of inserting an expansion joint into a recess of a panel, the joint comprising:
a body having a substantially cylindrical shape with an outer end and an inner end,
a plug comprising a proximal end with a collar, a side surface and a distal end with a closed surface having a central hole; and
a fixing pin comprising a shank and a head;
wherein, in a preassembled configuration, the plug is connected to the inner end of the body by means of the collar while the rest of the plug is not fitted on the body;
wherein, in the preassembled configuration, the shank of the fixing pin is held in the central hole of the plug; and
wherein said body comprises a fixing member;
the method comprising:
pressing said preassembled joint inside the recess; and
further pressing said preassembled joint inserted inside the recess such that said shank engages said fixing member so as to lock the surface of the distal end of the plug between the head of the pin and the inner end of the body so that the plug expands radially inside the recess as a result of penetration of the body into the plug.

### BRIEF DESCRIPTION OF THE FIGURES

The present invention will become clearer from the following detailed description, provided by way of a non-limiting example, to be read with reference to the accompanying drawings, in which:
- Figure 1 is an exploded plan view of the main components of a joint according to the present invention;
- Figure 2 is a longitudinally sectioned view of the components shown in Figure 1;
- Figure 3 is an exploded axonometric view of the components shown in Figure 1;
- Figure 4A-4G are plan views of a number of embodiments of the joint according to the present invention;
- Figures 5.1 to 5.8 are various views of the first embodiment of the joint according to the present invention;
- Figures 6.1 to 6.8 are various views which illustrate use of the joint according to the first embodiment of the present invention;
- Figures 7.1 to 7.8 are various views of the second embodiment of the joint according to the present invention;
- Figures 8.1 to 8.8 are various views which illustrate use of the joint according to the second embodiment of the present invention;
- Figures 9.1 to 9.8 are various views of the third embodiment of the joint according to the present invention;
- Figures 10.1 to 10.10 are various views which illustrate use of the joint according to the third embodiment of the present invention;
- Figures 11.1 to 11.7 are various views of the fourth embodiment of the joint according to the present invention;
- Figures 12.1 to 12.6 are various views which illustrate use of the joint according to the fourth embodiment of the present invention;
- Figures 13.1 to 13.7 are various views of the fifth embodiment of the joint according to the present invention;
- Figures 14.1 to 14.4 are various views which illustrate use of the joint according to the fifth embodiment of the present invention;
- Figures 15.1 to 15.7 are various views of the sixth embodiment of the joint according to the present invention;
- Figures 16.1 to 16.5 are various views which illustrate use of the joint according to the sixth embodiment of the present invention;

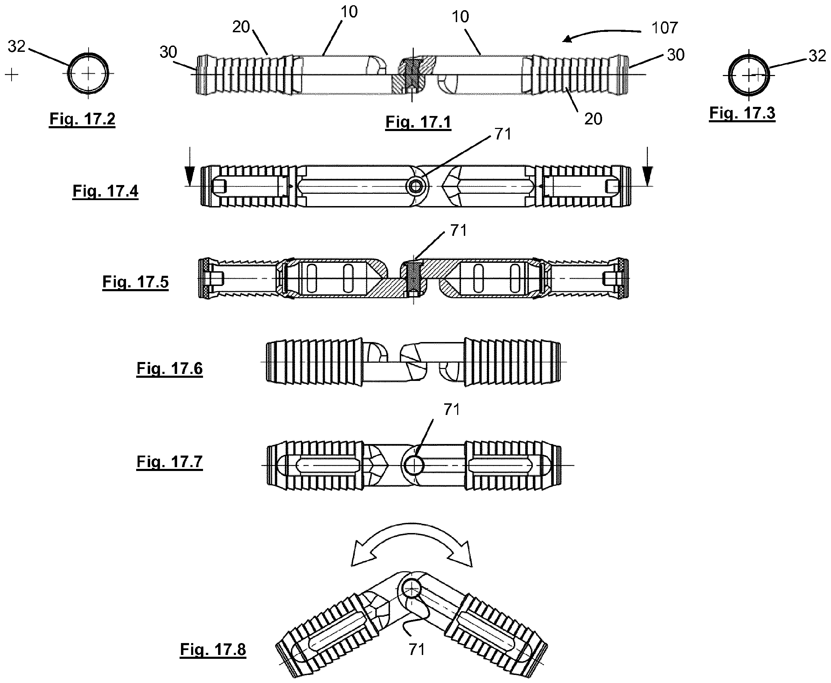

- Figures 17.1 to 17.8 are various views of the seventh embodiment of the joint according to the present invention; and
- Figures 18.1 to 18.3 are various views which illustrate use of the joint according to the seventh embodiment of the present invention.

### DETAILED DESCRIPTION

The joint according to the present invention is particularly suitable for being inserted in a milled slot formed in a panel of a furniture unit or the like. In particular, it is designed to be inserted in the lateral thickness of a shelf of a furniture unit so as to connect said shelf to a flank of the said unit. The joint according to the present invention is suitable for use in any material, but is particularly effective when the shelf is made of a non-homogeneous material such as a chipboard panel or an ennobled chipboard panel. These panels are formed by means of the agglomeration of wood shavings.

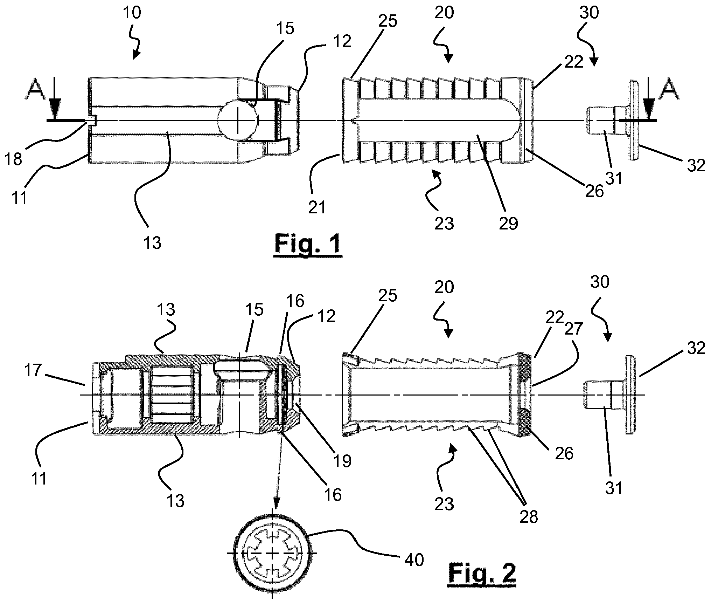

With reference initially to Figures 1-3, the main components of a joint according to the present invention are shown.

A joint 100 according to the present invention typically comprises a body 10, a plug 20 and a fixing pin 30.

The body 10 has a roughly cylindrical shape with a first end (also called outer end) 11 and a second end 12 (also called inner end because during use it is located close to the bottom of the hole in which the joint is inserted). Preferably, the body 10 is formed by two half-shells 10A and 10B which, when joined together, form a substantially hollow body. The inside of the body 10 and any gearing inside it will be described further below.

The body 10 has a roughly circular cross-section, but preferably comprises two diametrically opposite longitudinal strips 13 which form two flat surfaces. The longitudinal strips 13 extend substantially along the whole length of the body 10. The body 10 has a transverse through-hole 15 in the vicinity of the inner end 12 of the body 10.

Preferably, the inner end 12 of the body 10 is tapered and has a pair of diametrically opposite reliefs 16 for retaining the plug 20, as will become clear below.

The outer end 11 of the body 10 has preferably a longitudinal hole 17. Preferably it also has a centering incision 18 for the head of a screwdriver or other similar tool.

The inner end 12 of the body 10 has preferably a flared longitudinal hole 19.

The body 10 may be made of a metallic material such as steel, aluminum, zamak or alloys thereof. Alternatively, the body 10 may be made of structural plastics such as glass-fiber reinforced nylon.

The plug 20 has preferably a roughly cylindrical shape with a proximal end 21, a distal end 22 and a side surface 23. The terms "distal" and "proximal" are relative to the inner end 12 of the body 10.

The proximal end 21 comprises preferably a collar 25 configured to engage the reliefs 16 of the inner end 12 of the body 10 so that, in a preassembled configuration, the body 10 and the plug 20 are stably connected. The collar preferably has a pre-weakened point (for example a V-shaped notch 251) for favoring breakage thereof in a substantially predictable manner.

The distal end 22 comprises a closed face 26, apart from a central hole 27 for the shank 31 of the fixing pin 30.

Preferably, the side surface of the plug 20 comprises a plurality of parallel fins 28. Preferably, the side surface 23 of the plug 20 has a pair of diametrically opposite longitudinal windows 29 with a size and form similar to that of the longitudinal flat surfaces 13 of the body 10.

The plug 20 is preferably made of a thermoplastic material and is preferably obtained by means of molding. Preferably it has a small thickness of the side surface, for example less than 1 mm. Preferably, the thickness at the distal end 22 is greater.

The fixing pin 30 has a form similar to that of a rivet, with a cylindrical shank 31 and a head 32 connected to the shank. The head is in the form of a flat disk. In an assembled configuration, the plug 20 is joined together with the body 10 as already mentioned above (collar 25 of the plug 20 retained by the projections 16 of the body 10) and the fixing pin 30 is connected to the plug 20 since the shank 31 of the pin 30 is inserted with interference inside the central hole 27 of the distal end 22 of the plug 20.

According to the present invention, a member 40 configured to engage in a substantially irreversible manner the shank 31 of the fixing pin 30 is housed inside the body 10. According to a preferred embodiment, the member 40 configured to engage in a substantially irreversible manner the shank 31 of the fixing pin 30 comprises a self-locking stop ring for grooveless shafts. Preferably, the member comprises two, three or more self-locking stop rings 40 for shafts, which are packed together. Preferably, the stop rings are held in position between the bottom of the body 10 and a first inner rib.

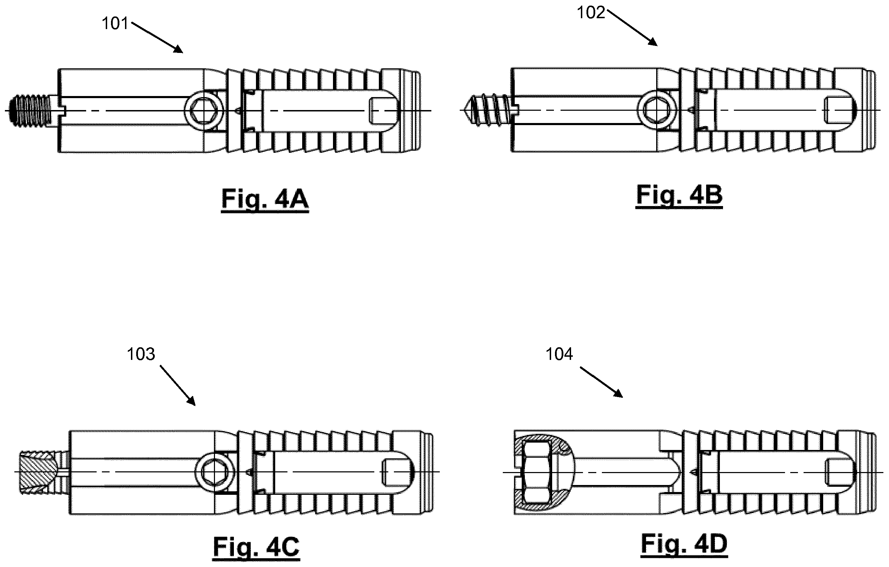

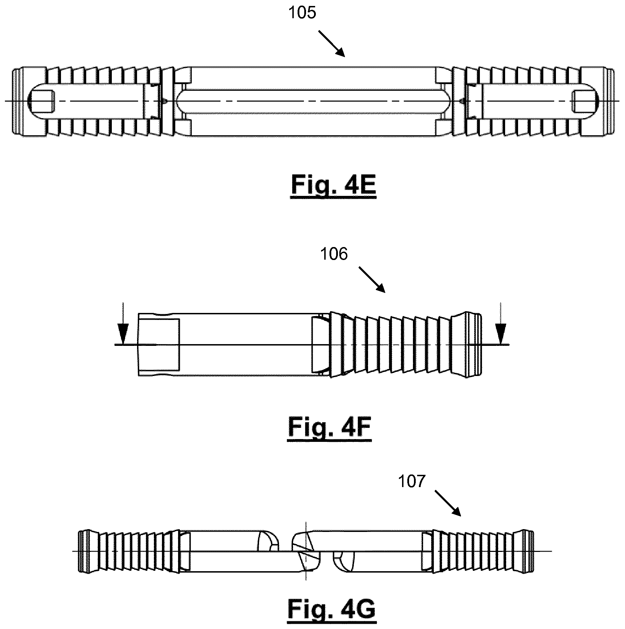

The joint according to the present invention may assume different configurations depending on the intended use. Figure 4 shows a number of embodiments which will be described singly below. According to the first embodiment (Fig. 4A), the joint 101 is configured to be inserted inside a recess (or milled slot) 201 formed in the thickness of a panel 200 and to connect the panel 200 to a shoulder 210 of a furniture unit by means of a threaded pin 67. In particular, the threaded pin 67 is configured to engage an internally threaded bush 300 pre-inserted inside the shoulder 210 of the furniture unit.

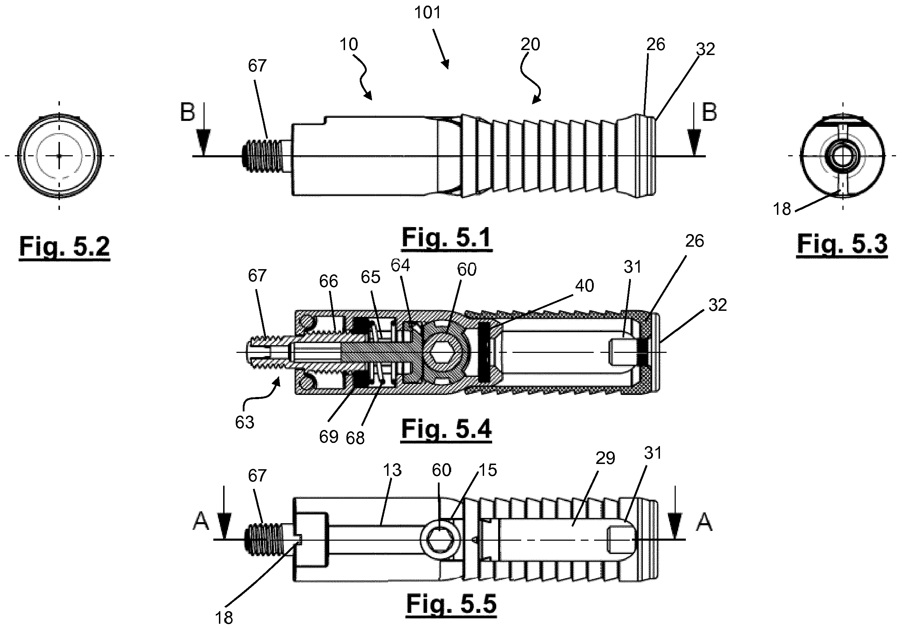

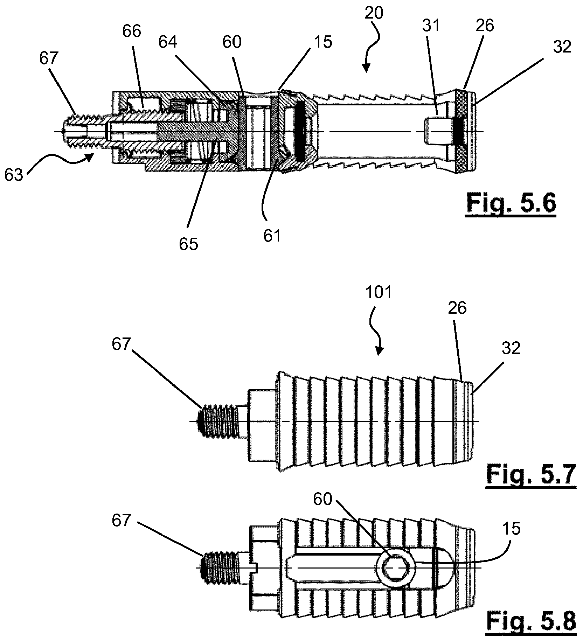

Figures 5.1 to 5.8 show the joint 101 according to the first embodiment. The body, the plug and the fixing pin are as shown in Figures 1-3 and as described in connection with these figures. Therefore, a detailed description thereof will not be repeated, but the gearing inside the body will be described.

The gearing comprise a transverse shaft 60 with a first bevel gear 61 and a longitudinal shaft 63 with a second bevel gear 64 meshing with said first bevel gear 61. The first shaft 60 preferably comprises a cylinder with a through-cavity having a hexagonal cross-section so that it may be rotated by means of a hexagonal socket screw key such as an Allen key 400. The hexagonal through-cavity is situated opposite the transverse through-hole 15 of the body 10.

The longitudinal shaft 63 preferably comprises an inner shaft 65 with a hexagonal cross-section connected to the second bevel gear 64 and an outer shaft 66 which is concentric with respect to the inner shaft 65 and is engaged therewith such that the rotation of the inner shaft 65 causes the rotation of the outer shaft 66. The outer shaft 66 terminates with an outer threaded section which forms the said threaded pin 67. According to an embodiment, the thread may be an M4 or M6 thread.

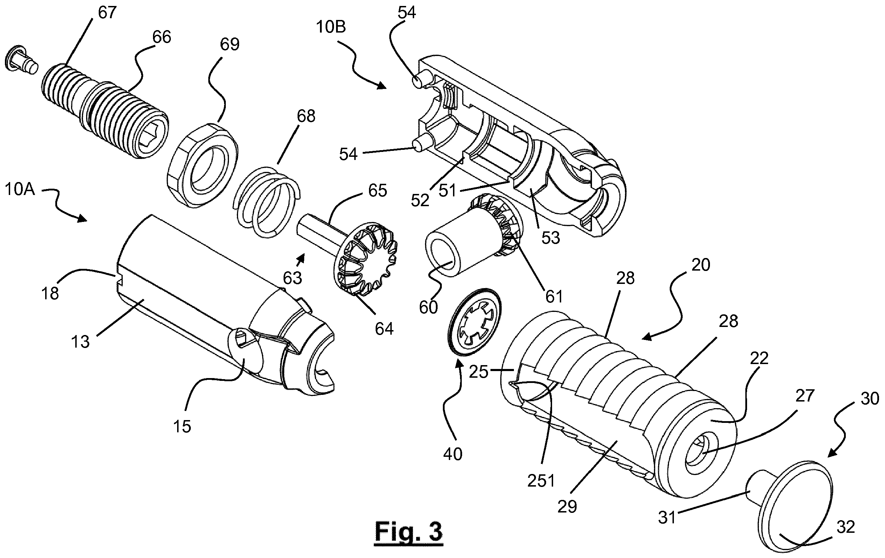

A nut 69 which acts as a shoulder is preferably provided in a middle position along the longitudinal shaft. Preferably a cylindrical spring 68 is mounted around said outer shaft 66 and is retained between said nut 69 and a rib 52 (Fig. 3) inside the half-shells 10A and 10B of the body 10. The spring 68 tends to push the threaded pin 67 outwards. The nut 69 is preferably screwed onto a thread of the outer shaft 66.

The threaded pin 67 may assume (i) the completely retracted position, namely not projecting from the outer end of the body, (ii) the completely extended position, namely completely projecting from the outer end of the body, or (iii) any intermediate position. The translation of the threaded pin 67 occurs upon rotation of the transverse shaft 60 (accessible via the transverse hole 15 in the body 10). This rotation causes the rotation of the first bevel gear 61, the second bevel gear 64, the inner shaft 65 and the outer shaft 66.

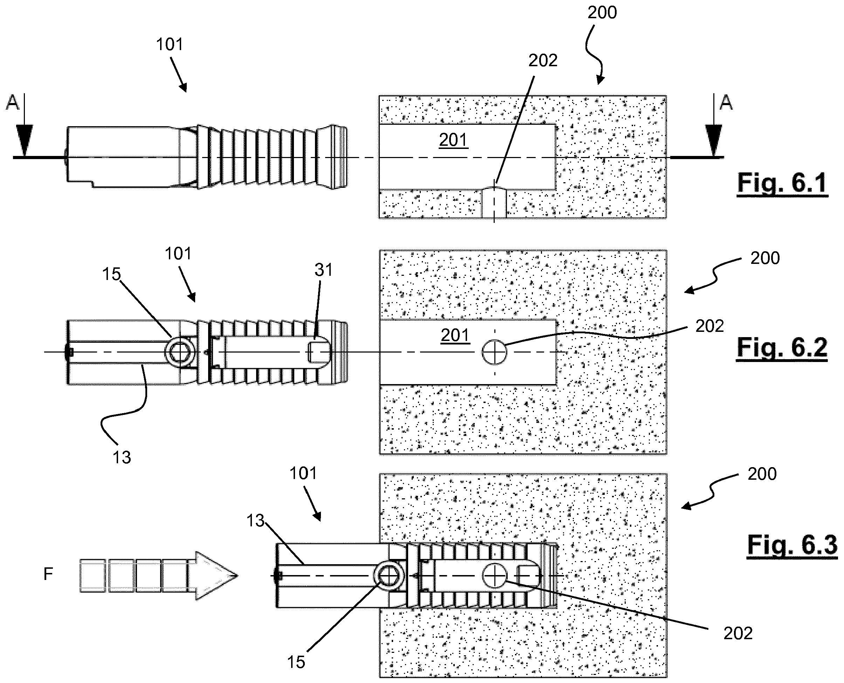

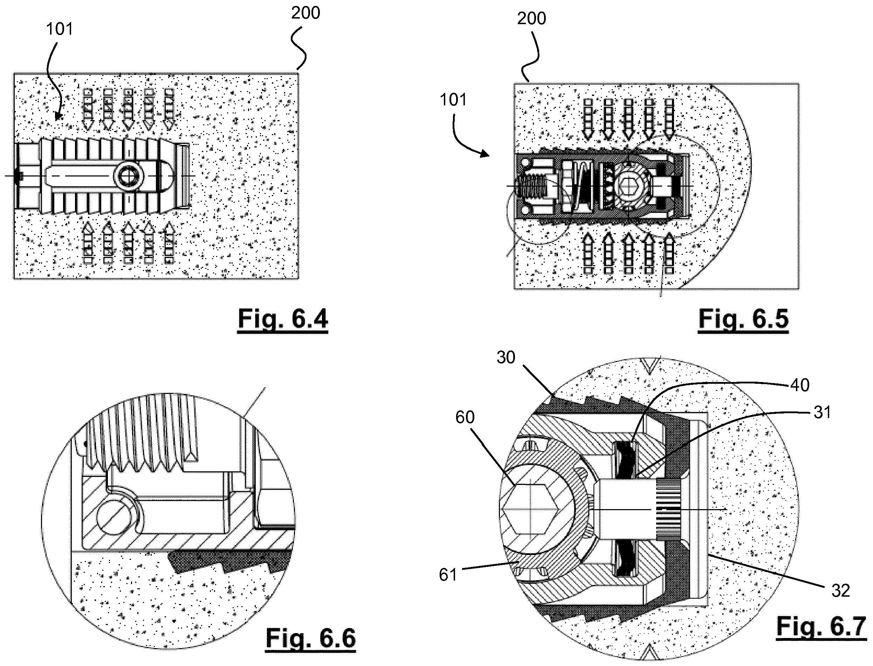

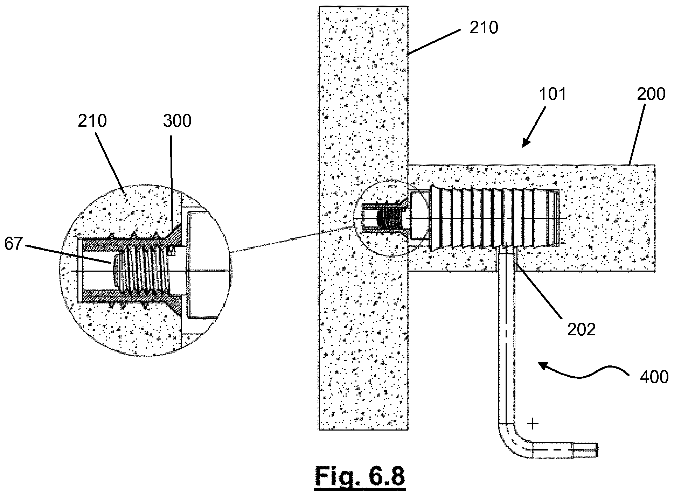

Figures 6 show in schematic form the main steps for joining a first panel (shelf) 200 with a second panel (upright or shoulder) 210. The shelf 200 is provided with a recess 201 for receiving the joint 101 according to the invention, and the upright 210 has inserted therein a bush 300 with a threaded hole for receiving the pin 67 of the joint 101 according to the invention. The shelf 200 also has formed therein beforehand a transverse hole 202 in a suitable position. Figures 6.1 and 6.2 show a portion of the shelf 200, the recess 201, the transverse hole 202 and the joint 101 according to the first embodiment. The joint 101 is preassembled and the threaded pin 67 is substantially in its completely retracted position. Then (Figure 6.3), the preassembled joint 101 is pushed completely inside the recess 201. By means of a further axial thrusting force (Figure 6.4), the body 10 is pushed inside the plug 20 and this movement causes a substantially uniform radial expansion of the plug 20 inside the recess 201. Advantageously, with this movement, the shank 31 of the fixing pin 30 engages with the self-locking stop ring 40 (or the series of self-locking stop rings 40) inside the body 10. Basically, the engagement between the fixing pin 30 and the self-locking stop rings 40 fixes the plug 20 to the body 10 inside it. Owing to this engaging action, the extraction force which would be necessary to extract the body from the recess 201 is greatly increased. This is extremely advantageous in all cases, but in particular when the material is not compact, but consists of agglomerate material. Figures 6.4 and 6.5 show the joint completely inserted inside the recess. Figures 6.6 and 6.7 are two enlarged views of the zones shown encircled in Figure 6.5.

Figure 6.8 shows the threaded pin 67 completely extracted and screwed inside the hole of the bush 300 of the shoulder 210. In order to extract the threaded pin, the assembler has inserted an Allen key 440 inside the transverse hole 202 of the shelf 200 and has engaged the transverse shaft 60 of the joint 101.

As shown in Figures 6, the joint 101 is preassembled such that the two windows of the plug are aligned with the two flat surfaces of the body. The two windows also make the transverse hole in the body entirely accessible. Obviously, it is also necessary for the transverse hole in the body to be aligned with the transverse hole in the shelf. If the assembler were to note a slight misalignment after assembly, a rotational adjustment may be performed by acting on the front incision 18 using a screwdriver or the like.

The joint according to the first embodiment is very advantageous and practical. Firstly it ensures a strong fixing action because it acts over a broad surface. Among the advantages of the joint there is also the fact that it may be mounted at the factory using special machinery and need not be mounted on-site. Advantageously, the threaded pin is completely retracted. The fact that it does not project facilitates storage and mounting and prevents the threaded pin from scratching or ruining other parts of the furniture unit. Moreover, it allows a furniture unit to be assembled in a confined area.

Advantageously, the joint may be mounted only by exerting a pressure in the axial (longitudinal) direction of the body. Rotational movements are not necessary.

Another advantage is that the joint is completely reversible and the shelf on which it is mounted may be used as an intermediate shelf, as a base or as a top lid.

Owing to the spring, the threaded pin is pushed so as to engage firmly with the threading of the bush in the shoulder.

The Applicant has established that only one self-locking stop ring 40 is sufficient to ensure an extraction force of about 60 kg. A configuration with two/three stop rings 40 substantially duplicates/triplicates the value of the extraction force. The configuration with three self-locking stop rings is considered to be the preferred one.

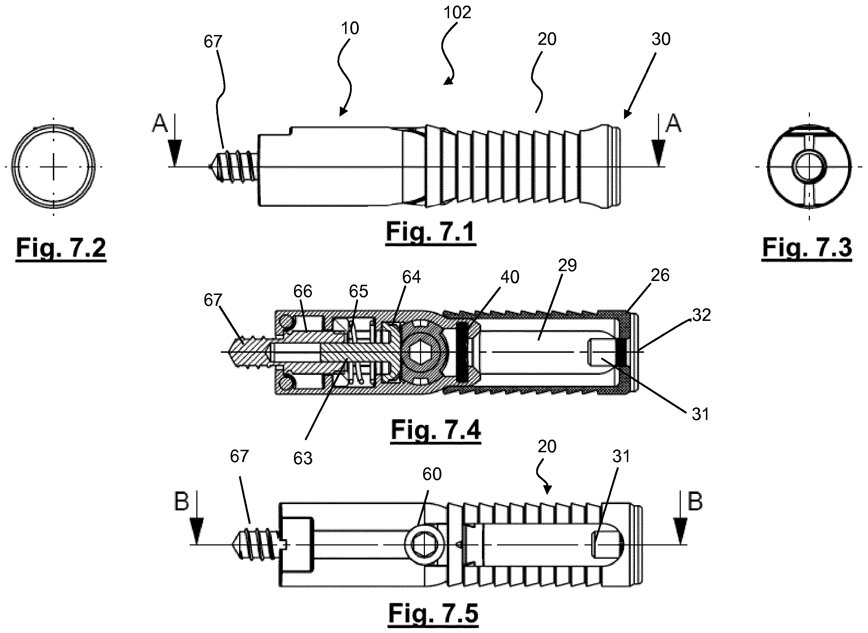

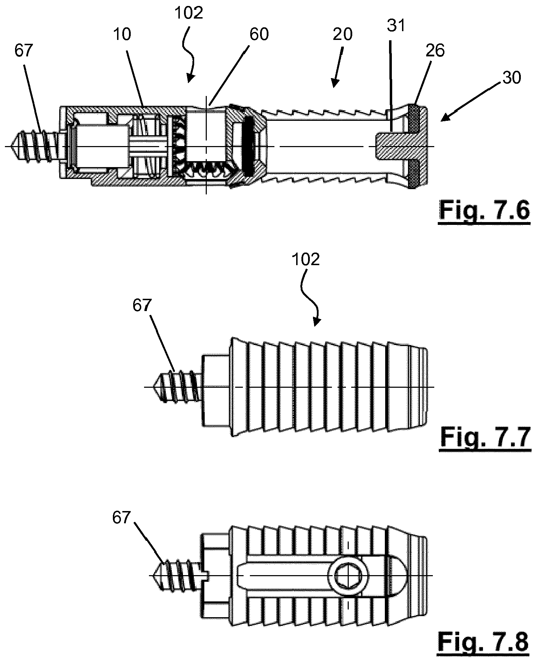

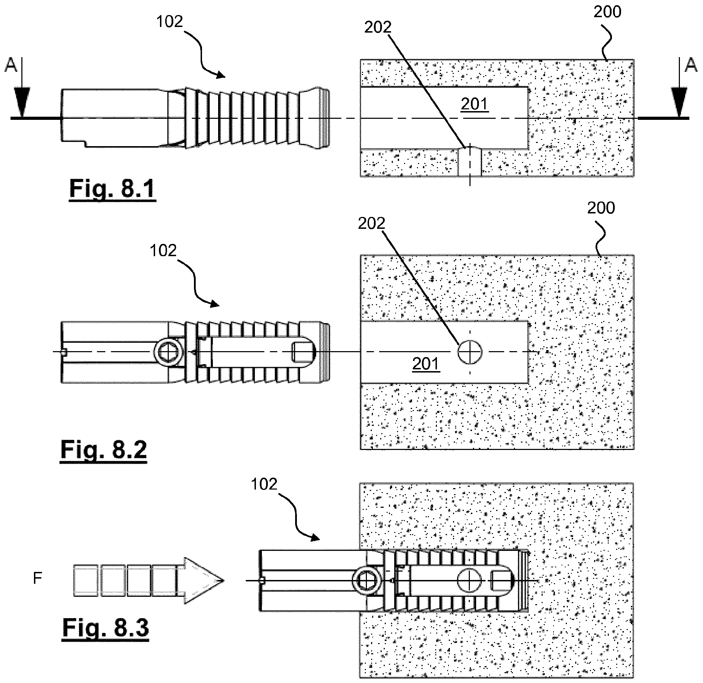

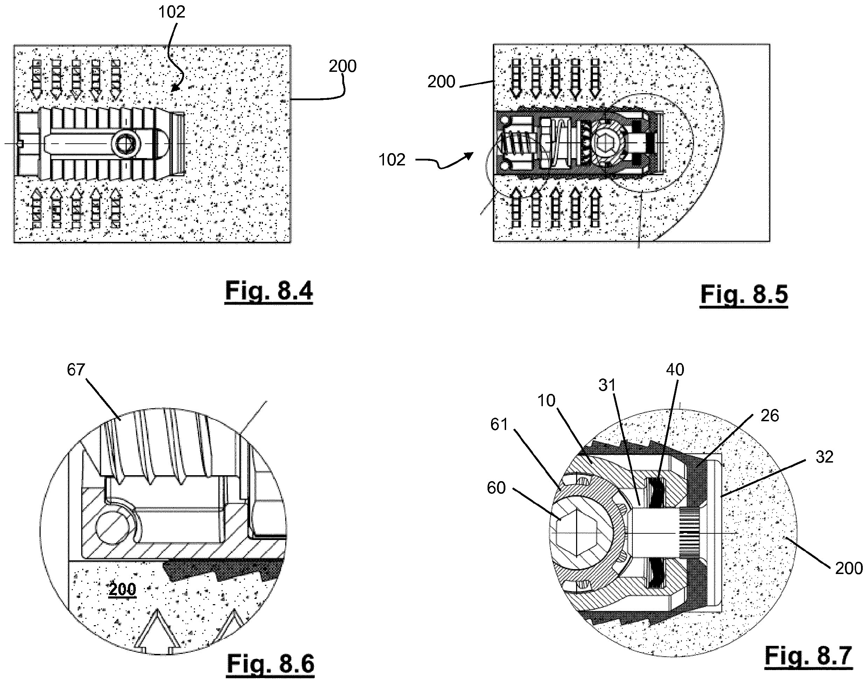

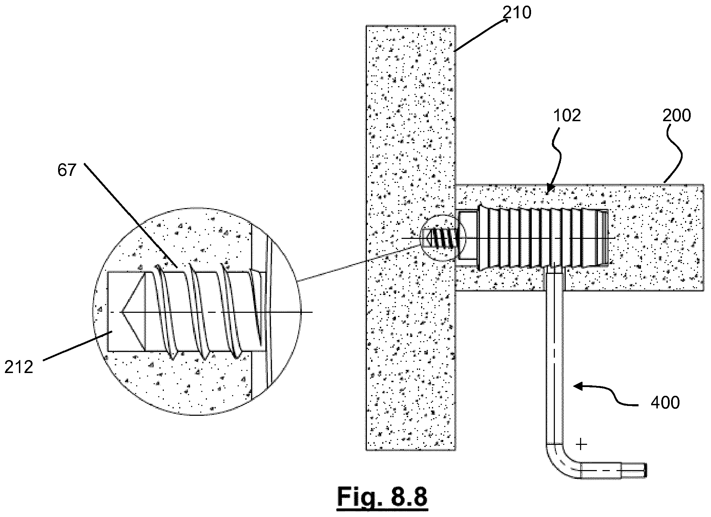

The second embodiment 102 is similar to the first embodiment. The difference lies in the fact that the threaded pin 67 comprises a biting thread, like a self-tapping screw used for wood, namely is able to engage directly in the panel. The second embodiment is shown in Figures 7 and 8.

The second embodiment 102 will not be further described, but reference may be made to the detailed description of the first embodiment. The second embodiment has all the advantages of the first embodiment. A further advantage lies in the fact that it is not necessary to insert a bush in the shoulder 210 but, at the most, a receiving hole must be formed in order to facilitate the engagement of the self-tapping thread in the shoulder.

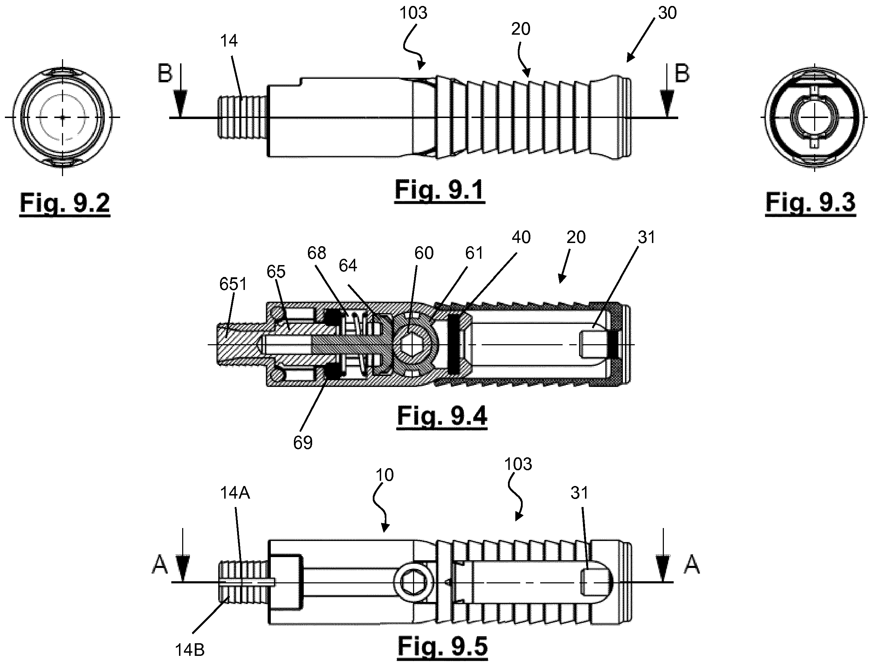

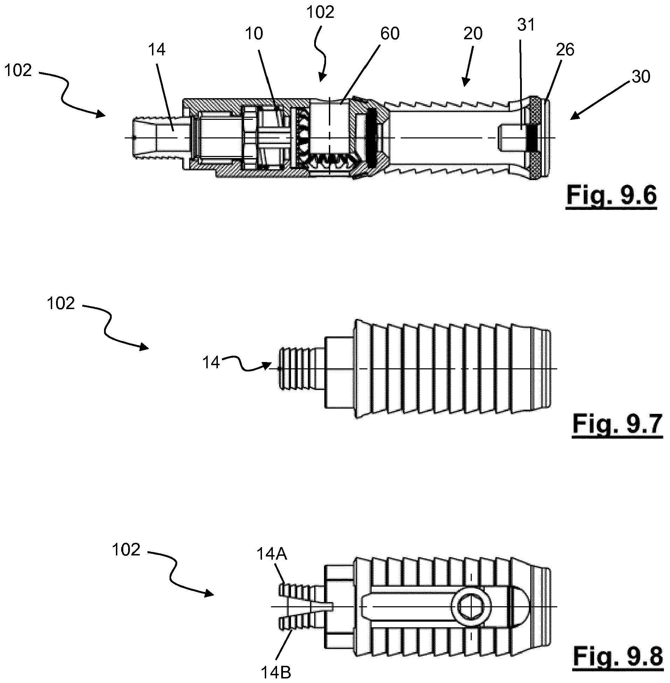

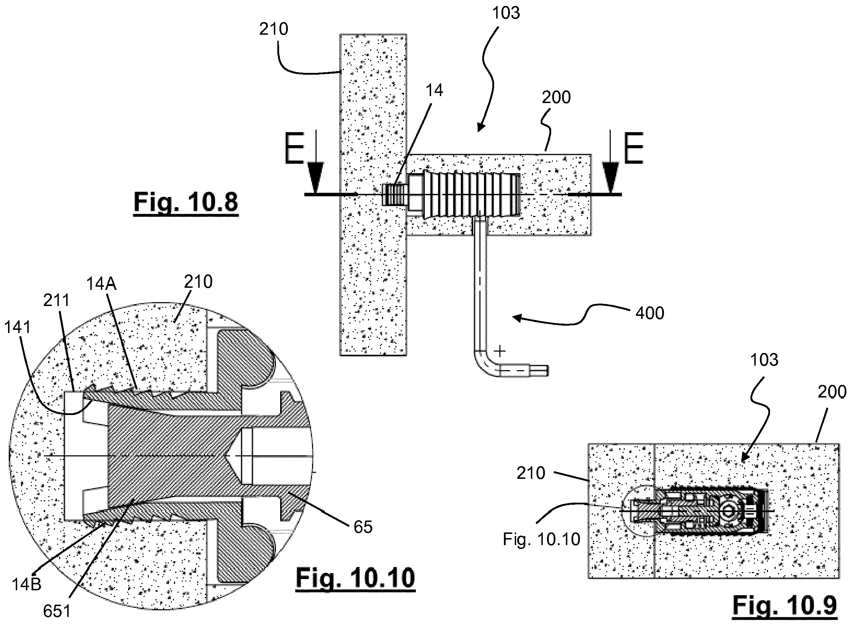

The third embodiment 103 is similar to the first embodiment. The difference lies in the fact that the threaded pin 67 is of the expanding type. As shown in Figures 9 and in particular in Figures 9.4 and 9.6, the front end 11 of the body 10 is configured so as to have a projecting toothed pin 14. More particularly, the projecting toothed pin 14 is formed by two half-pins 14A and 14B, which form respectively part of the first and second half-shells 10A and 10B. Internally, the threaded pin 14 terminates in a conical portion 141 which is open outwards (Figures 9.2 and 10.10). The internal shaft 65 terminates in a conical portion 651 which substantially complements the conical portion 141 of the toothed pin 14. In this way, when the internal shaft moves inwards, it widens the two half-pins 14A and 14B. Owing to this solution, the toothed pin 14 may be inserted inside a hole 211 formed in the shoulder 210.

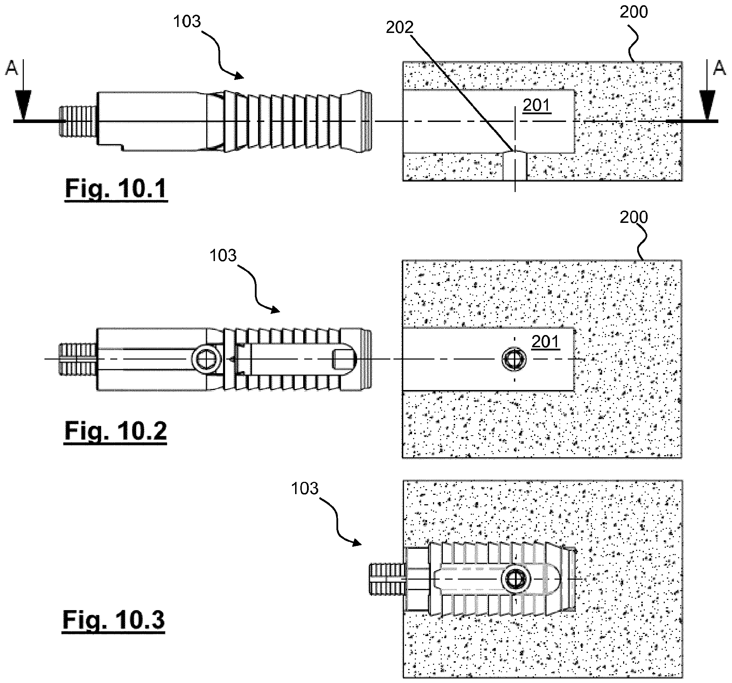

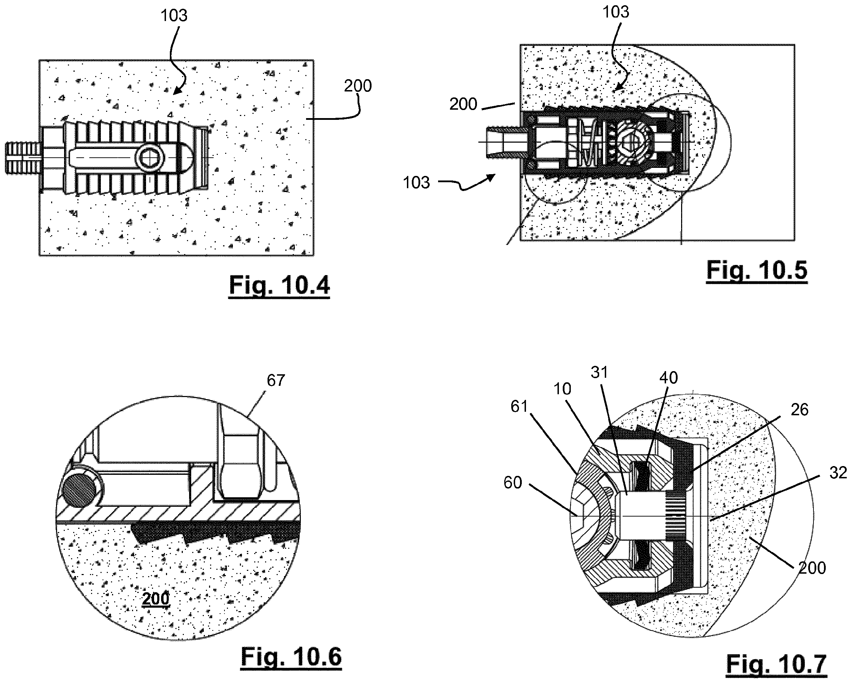

Figures 10, which have been already partially commented, illustrate the steps for inserting a joint 103 according to the third embodiment inside a recess 201 of a shelf 200 and joining it to a shoulder 210 of a furniture unit.

The joint 103 is pressed inside the recess 201 by inserting the plug 20 (Figures 10.1, 10.2 and 10.3). With a further pressing force the body 10 is pushed towards the bottom of the recess 201 (Figure 10.4). This further pressing force causes shearing of the collar 25 and the body 10 moves inside the plug 20. The plug expands radially. When the body 10 reaches the end of its travel movement, the shank 31 of the pin 30 penetrates into the holes 27 and is irreversibly engaged by the self-locking stop rings 40. This locks the bottom of the plug 20 rigidly between the head 32 of the pin 30 and the bottom of the body 10. Therefore the fins of the plug penetrate into the walls of the recess and retain the joint inside the recess, greatly increasing the extraction force, namely the force needed to extract the joint 103 from the recess 201.

Figure 10.8 shows a shelf 200 arranged at 90° next to a shoulder 210. A joint 103 has been locked in position inside the shelf and its toothed pin has been inserted inside a corresponding hole in the shoulder. By inserting an Allen key inside the transverse hole 202 of the shelf and inside the hole 15 in the body, the transverse shaft 60 (which has a hexagonal internal cavity) can be rotated. The rotation of the transverse shaft causes the rotation of the first bevel gear. In turn, the rotation of the first bevel gear causes the rotation of the second bevel gear (meshing with the first bevel gear) and consequently of the inner shaft. The rotation of the inner shaft causes the rotation of the outer shaft 65 and the translation of its conical portion 651 (Fig. 10.10). This translation tends to open the two half-pins 14A and 14B away from each other (Fig. 9.8) so that they engage with the walls of the hole, thus locking the shelf to the shoulder.

This third embodiment retains substantially all the advantages indicated for the first embodiment except for the fact that the pin 14 is always projecting from the outline of the shelf. In addition, it is not required to insert a bush inside the hole of the shoulder 210.

Figure 4D shows a fourth embodiment of the joint 104 according to the present invention.

The fourth embodiment 104 will not be further described, but reference may be made to the detailed description of the first embodiment.

The difference between the first embodiment 101 and the fourth embodiment 104 is that the latter does not have a threaded pin, but an (internally) threaded nut 67. This joint 104 therefore provides a practical and strong solution for equipping a shelf with a threaded hole (the threaded hole inside the nut).

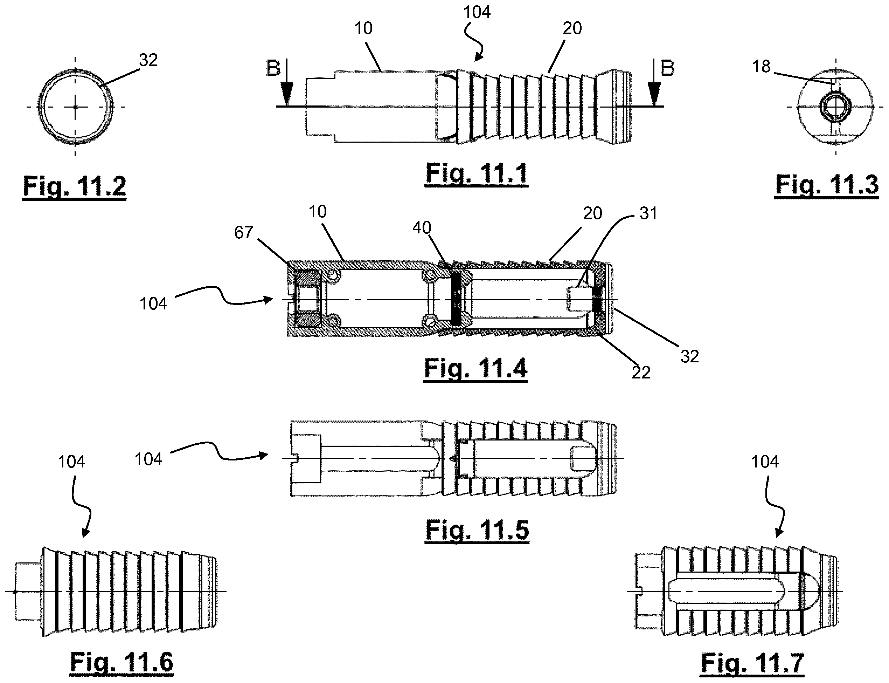

Figures 11 show the joint 104 according to the fourth embodiment in the preassembled configuration (Figures 11.1 - 11.5) and in the configuration in which the body 10 is engaged inside the plug 20 (Figures 11.6 and 11.7).

In a similar manner to the preceding embodiments, Figures from 12.1 to 12.4 illustrate the steps for inserting the preassembled joint 104 inside a recess 201 of a shelf 200. These steps are entirely similar to the corresponding steps of the other embodiments.

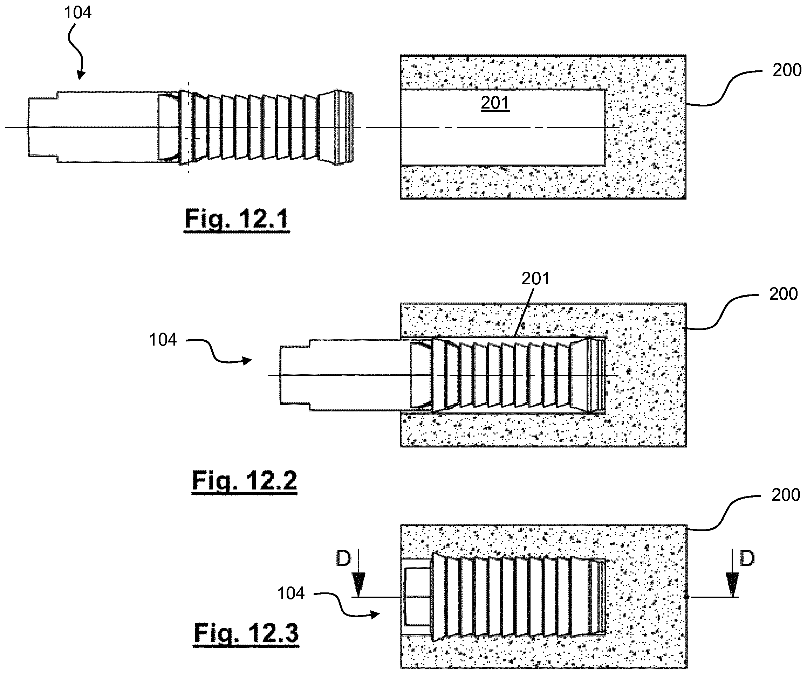

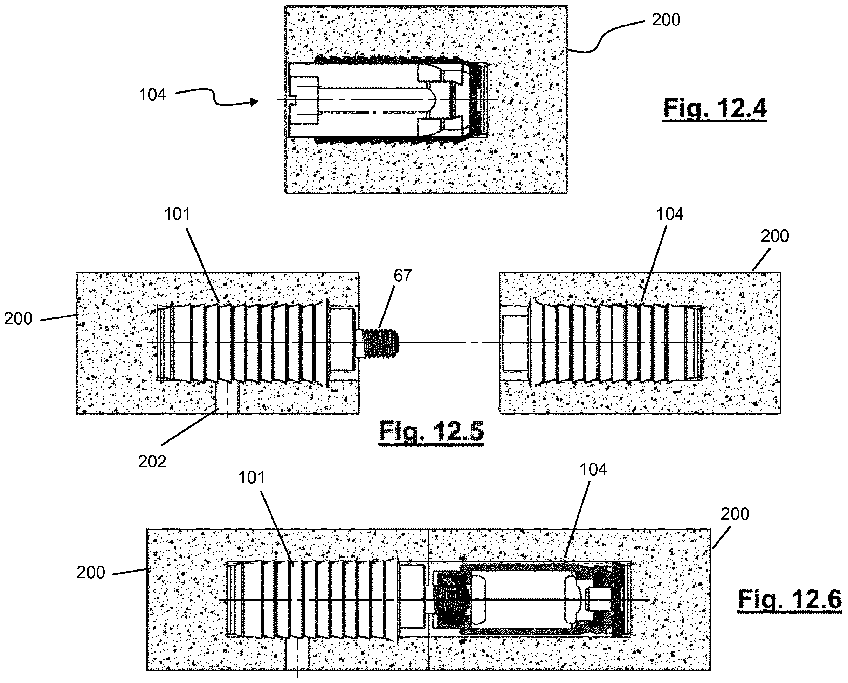

Figure 12.5 shows the joining together of two panels 200 (for example two shelves) in an end-to-end configuration using a joint 104 according to the fourth embodiment and a joint 101 according to the first embodiment: the threaded pin 67 of the joint 101 is screwed into the threaded hole of the nut 67 of the joint 104. In this way, a strong and removable connection between two panels 200 is provided, even made of a non-homogeneous material.

Figure 4E shows a fifth embodiment of the joint 105 according to the present invention.

The fifth embodiment 105 will not be further described, but reference may be made to the detailed description of the first embodiment and the partial descriptions of the other embodiments.

The joint 105 according to the fifth embodiment is configured to join together in an end-to-end configuration two panels, for example two shelves 200.

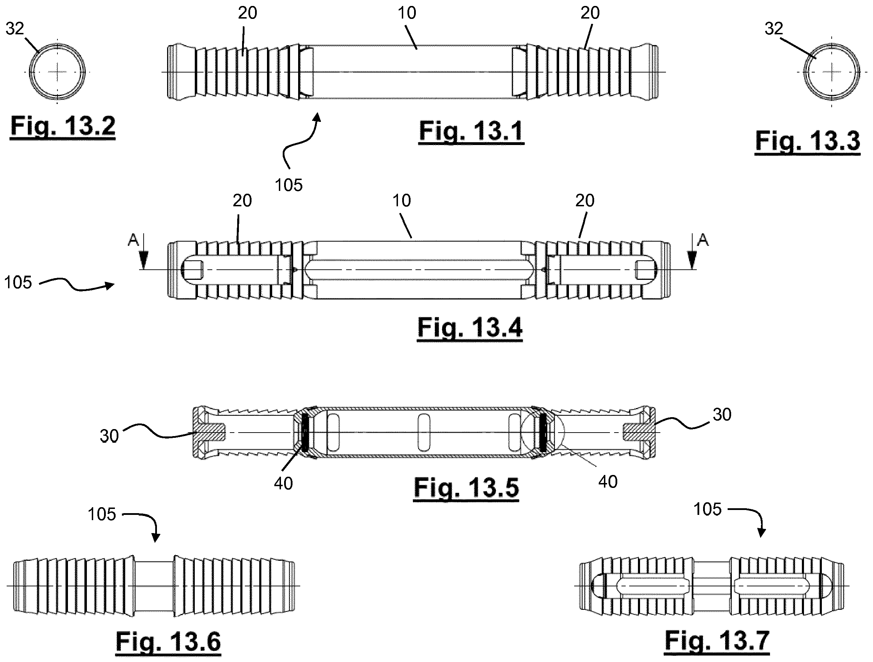

The joint 105 is shown in the various Figures 13. As will become clear from Figures 13, the joint 105 comprises a body with at least double the length, two plugs 20 (each one at each end of the body) and two pins 30, in turn at the ends of the plugs 20. The pins 30 and the plugs 20 are entirely similar to those of the other embodiments. The body 10, as mentioned above, has a length (at least) twice that of the body of the preceding embodiments, but the ends of the body are shaped preferably like the inner end of the body of the joint 101, 102, 103 or 104 and retain the collar 25 of its pin 20. Figures 13.6 and 13.7 show the joint 105 after the body 10 has penetrated into the two plugs 20.

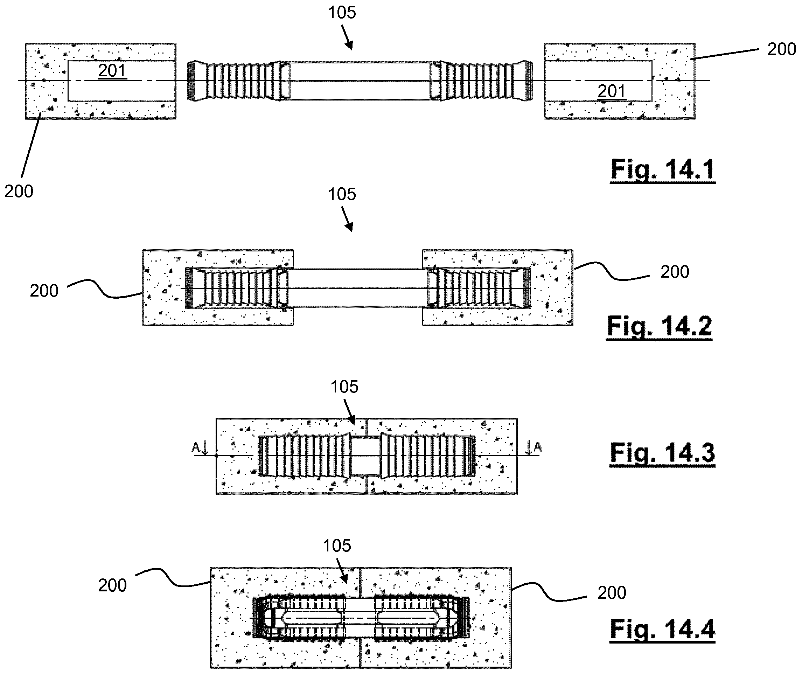

Figures 14 show the various steps for inserting the joint 105 inside a recess 201 of a first panel 200 and inside a recess 201 of a second panel 200. In particular, Figure 14.1 is an enlarged view which shows the joint 105 before it is inserted inside the recesses 200 of the two panels, and Figure 14.2 shows the joint 105 after the two plugs 20 have been inserted inside the recesses 201. When the two panels are moved towards each other, the right-hand part of the body 10 penetrates inside the right-hand plug 20 and the left-hand part of the body 10 penetrates inside the left-hand plug 20. This penetration of the body 10 into the plug 20 widens the plug radially inside the recess 201 and makes the joint particularly strong. The two panels (for example two shelves) 200 connected together are shown in Figures 14.3 and 14.4.

Figure 4F shows a sixth embodiment of the joint 106 according to the present invention.

The sixth embodiment 106 will not be further described, but reference may be made to the detailed description of the first embodiment and to the partial descriptions of the other embodiments.

The joint 106 according to the sixth embodiment is configured to join together two panels 200 in a 90° configuration.

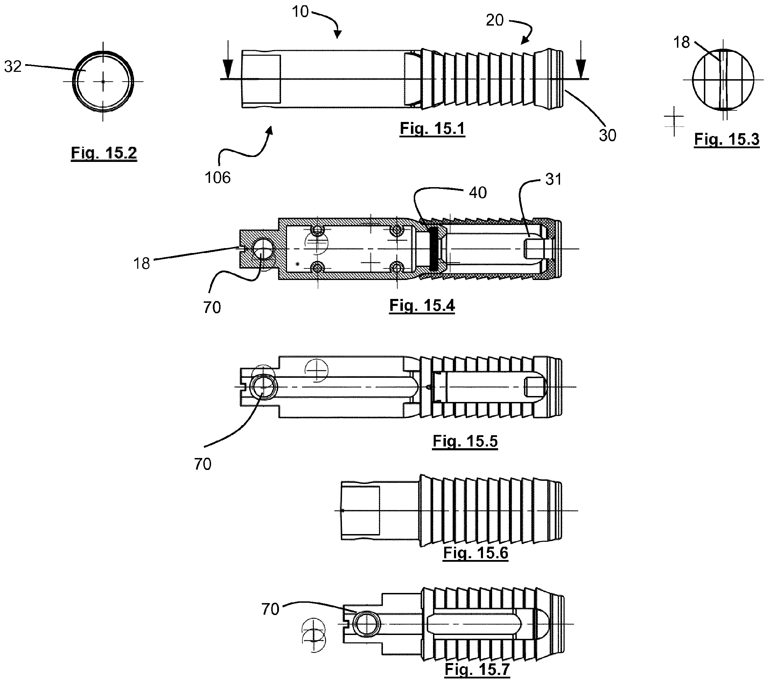

The joint 106 is shown in the various Figures 15. As is clear from Figure 15, the joint 106 comprises a body 10, a plug 20 and a fixing pin 30. The body comprises, on its outer end 31, a projecting part with a threaded transverse hole 70. There are no members or mechanisms inside the body.

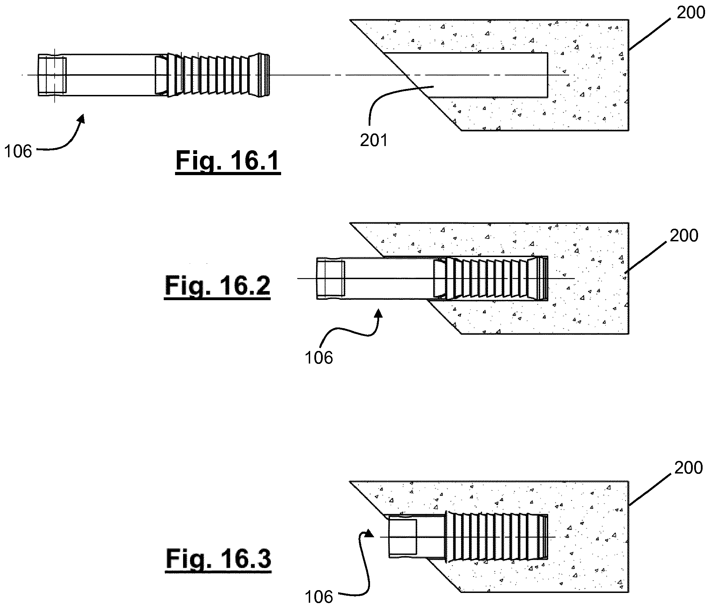

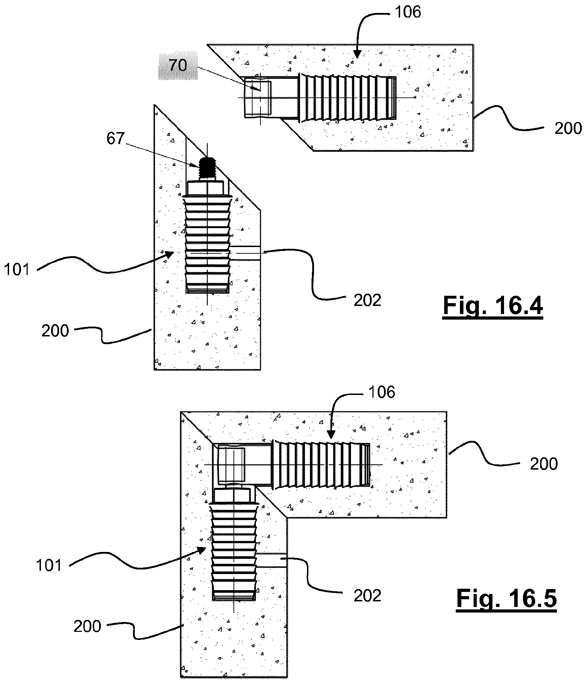

Figures 16 show the various steps for inserting the joint 106 inside a recess 201 of a first panel 200. The joint 106 is designed to cooperate with a joint 101 inserted inside another recess 201 of another panel 200. The two panels are cut at 45°. First the preassembled joint 106 is inserted inside the recess 201 of the first panel 200 and the joint 101 is inserted inside the recess of the second panel. With a further pressing action the joint 106 and the joint 101 are locked inside the respective recesses. The only special measure is that of directing the hole 70 so that it may be engaged by the threaded pin 67 of the joint 101. Engagement of the hole 70 by the pin 67 is shown in Figures 16.4 and 16.5.

Figure 4G shows a seventh embodiment of the joint 107 according to the present invention.

The seventh embodiment 107 will not be further described, but reference may be made to the detailed description of the first embodiment and to the partial descriptions of the other embodiments.

The joint 107 according to the seventh embodiment is configured to join together two panels 200 in an angled configuration.

The joint according to the seventh embodiment is similar to the double joint of the fifth embodiment, but the double body is hinged by means of a central pivot 71.

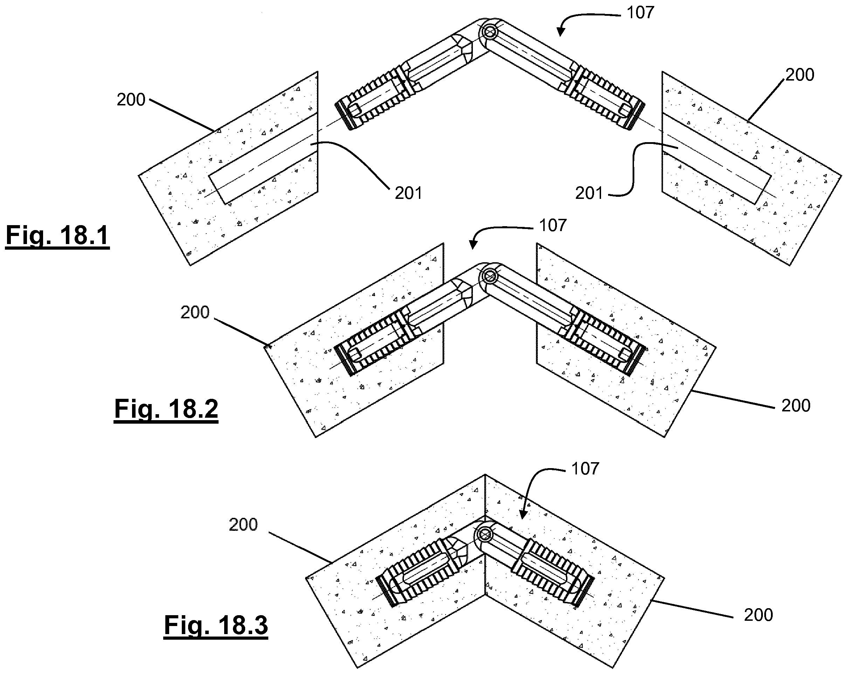

In this way, when the two angled cut panels 200 are moved towards each other, each part of the body enters inside the plug and is locked in that position. Figures 18 show how to use the joint according to the seventh embodiment.

Unlike joints such as wall expansion plugs, the joints according to the present invention are inserted with a unidirectional pressing movement and without a rotational or screwing movement.

## Claims

1. An expansion joint (101, 102, 103, 104, 105, 106, 107) for joining a first panel (200) with a second panel (210, 200), the joint comprising:
a body (10) having substantially a cylindrical shape with an outer end (11) and an inner end (12),
a plug (20) comprising a proximal end (21) with a collar (25), a side surface (23) and a distal end (22) with a closed surface (26) having a central hole (27), and
a fixing pin (30) comprising a shank (31) and a head (32),
wherein, in a preassembled configuration, said plug (20) is connected to the inner end (12) of the body (10) by means of the collar (25) while the rest of the plug is not fitted on the body (10);
wherein, in the preassembled configuration, the shank (31) of the fixing pin (30) is held in the central hole (27) of the plug (20);
wherein said body (10) comprises a fixing member (40); and
wherein, in an expanded configuration inside a recess (201) of a panel (200), said shank (31) is in engagement with said fixing member (40) so as to lock the surface of the distal end (22) of the plug (20) between the head (32) of the pin (30) and the inner end (12) of the body (10).

2. The joint of claim 1, wherein said fixing member (40) comprises a self-locking stop ring for shafts.

3. The joint of claim 1, wherein said fixing member (40) comprises a plurality of self-locking stop rings for shafts, packed together.

4. The joint of any of the preceding claims, comprising a first bevel gear (61) and a second bevel gear (64) engaged with said first bevel gear (61), a transverse shaft (60) integral with said first bevel gear (61) and a longitudinal shaft integral with said second bevel gear (64), such that the rotation of the transverse shaft causes rotation of the longitudinal shaft.

5. The joint of claim 4, wherein said transverse shaft is accessible from the outside of the body (10).

6. The joint of claim 4 or 5, wherein said transverse shaft comprises a threaded pin (67).

7. The joint of claim 4 or 5, wherein said transverse shaft comprises an internally threaded nut (67).

8. The joint of claim 4 or 5, wherein the front end (11) of the body (10) is configured so as to have a protruding threaded pin (14) comprising two half-pins (14A, 14B), wherein said longitudinal shaft comprises a conical end portion (651) configured to cooperate with an inner conical portion (141) of the threaded pin (14).

9. The joint of any one of claims 1-3, comprising two plugs, each connected to each of the ends of the body, two fixing pins (30) and two fixing members (40), one for each fixing pin.

10. The joint (106) of any one of the preceding claims, comprising a threaded transverse hole (70) in a projecting part of the front end (11) of the body (10), configured to engage a threaded pin (67) of another joint (101).

11. The joint (107) of any one of the preceding claims, further comprising a second body (10), a second plug (20) and a second fixing member (40) and a central pivot (71) for mutually rotating the bodies (10) with respect to each other.

12. A method for inserting an expansion joint (101, 102, 103, 104, 105, 106, 107) into a recess (201) of a panel (200), the joint comprising:
a body (10) having substantially a cylindrical shape with an outer end (11) and an inner end (12),
a plug (20) comprising a proximal end (21) with a collar (25), a side surface (23) and a distal end (22) with a closed surface (26) having a central hole (27), and
a fixing pin (30) comprising a shank (31) and a head (32)
wherein, in a preassembled configuration, said plug (20) is connected to the inner end (12) of the body (10) by means of the collar (25) while the rest of the plug is not fitted on the body (10);
wherein, in the preassembled configuration, the shank (31) of the fixing pin (30) is held in the central hole (27) of the plug (20); and
wherein said body (10) comprises a fixing member (40);
the method comprising:
(i) pressing said preassembled joint inside the recess (201); and
(ii) further pressing said preassembled joint inserted inside the recess such that said shank (31) engages said fixing member (40) so as to lock the surface of the distal end (22) of the plug (20) between the head (32) the pin (30) and the inner end (12) of the body (10) so that the plug expands radially inside the recess as a result of penetration of the body into the plug.
